(19)

Europäisches
Patentamt
European
Patent Office
Office européen
des brevets

(11) **EP 1 785 917 A2**

(12) **EUROPEAN PATENT APPLICATION**

(43) Date of publication:
**16.05.2007 Bulletin 2007/20**

(51) Int Cl.:
*G06N 1/00* (2006.01)   *G06F 15/18* (2006.01)

(21) Application number: **06122325.1**

(22) Date of filing: **16.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **18.10.2005 US 252487**

(71) Applicant: **NEC Laboratories America, Inc.
Princeton,
New Jersey 08540 (US)**

(72) Inventors:
• **VAPNIK, Vladimir**
  **Plainsboro, NJ 08536 (US)**
• **MILLER, Michael R.**
  **Lumberton, NJ 08048 (US)**

(74) Representative: **Betten & Resch
Patentanwälte,
Theatinerstrasse 8
80333 München (DE)**

(54) **Learning machine that considers global structure of data**

(57)   A new machine learning technique is herein disclosed which generalizes the support vector machine framework A separating hyperplane in a separating space is optimized in accordance with generalized constraints which are dependent upon the clustering of the input vectors in the dataset.

**FIG 1**

EP 1 785 917 A2

**Description**

**BACKGROUND OF INVENTION**

The invention relates to learning machines and, more particularly, to kernel-based techniques for implementing learning machines.

There are a number of known techniques for automating the classification of data based on an analysis of a set of training data. Of particular interest herein are kernel-based techniques such as support vector machines. The development of support vector machines has a history that dates back to 1965, when Chervonenkis and Vapnik developed an algorithm referred to as the generalized portrait method fox constructing an optimal separating hyperplane. A learning machine using the generalized portrait method optimizes the margin between the training data and a decision boundary by solving a quadratic optimization problem whose solution can be obtained by maximizing the functional:

$$W(\alpha) = \sum_{i=1}^{\ell} \alpha_i - \frac{1}{2} \sum_{i,j=1}^{\ell} \alpha_i \alpha_j y_i y_j (x_i, x_j)$$

subject to the constraint that $\sum_{i=1}^{\ell} y_i \alpha_i = 0$ and $\alpha_i \geq 0$ The Lagrange multipliers $\alpha_i$ define the separating hyperplane used by the learning machine. Supposing the optimal values for the multipliers are $\alpha_i^o$ and the corresponding value for the threshold is $b_o$, the equation for this hyperplane is $\sum_{i=1}^{\ell} \alpha_i^o y_i (x_i, x) + b_o = 0$.

In 1992, Boser, Guyon, and Vapnik devised an effective means of constructing the separating hyperplane in a Hilbert space which avoids having to explicitly map the input vectors into the Hilbert space See Bernard E. Boser, Isabelle M. Goyon, and Vladimir N. Vapnik, "A Training Algorithm for Optimal Margin Classifiers," Proceedings of the Fifth Annual Workshop on Computational Learning Theory (July 1992). Instead, the separating hyperplane is represented in terms of kernel functions which define an inner product in the Hilbert space The quadratic optimization problem can then be solved by maximizing the functional:

$$W(\alpha) = \sum_{i=1}^{\ell} \alpha_i - \frac{1}{2} \sum_{i,j=1}^{\ell} \alpha_i \alpha_j y_i y_j K(x_i, x_j)$$

subject to the constraints

$$\sum_{i=1}^{\ell} y_i \alpha_i = 0, \qquad \alpha_i \geq 0$$

In this case, the corresponding equation of the separating hyperplane is

$$\sum_{i=1}^{\ell} \alpha_i^o y_i K(x_i, x) + b_o = 0 \qquad\qquad (1)$$

In 1995, Cortes and Vapnik generalized the maximal margin idea for constructing the separating hyperplane in the image space when the training data is non-separable. See Corinna Cortes and Vladimir N Vapnik, "Support Vector Networks," Machine Learning, Vol. 20, pp. 273-97 (Sept 1995). The quadratic form of the optimization problem is expressed in terms of what is referred to as a "slack variable" which is non-zero for those points that lie on the wrong side of the margin, thereby allowing for an imperfect separation of the training data. By converting to the dual form, the quadratic optimization problem can again be expressed in terms of maximizing the following objective functional

$$W(\alpha) = \sum_{i=1}^{\ell} \alpha_i - \frac{1}{2} \sum_{i,j=1}^{\ell} \alpha_i \alpha_j y_i y_j K(x_i, x_j)$$

subject to the constraint $\sum_{i=1}^{\ell} y_i \alpha_i = 0$ but with the new constraint that

$$0 \le \alpha_i \le C.$$

Again, the corresponding equation of the separating hyperplane is given by equation (1) above. The equation is an expansion of those vectors for which $\alpha_i \neq 0$, these vectors being referred to in the art as "support vectors" To construct a support vector machine one can use any positive definite function $K(x_i, x_j)$ creating different types of support vector machines. Support vector machines have proven to be useful for a wide range of applications, including problems in the areas of bioinformatics or text classification.

## SUMMARY OF INVENTION

A new machine learning technique is herein disclosed which generalizes the support vector machine framework The input vectors from a dataset are first clustered, either manually or using an automated clustering technique The input vectors are mapped to a separating space, and a separating hyperplane in the separating space is optimized by generating coefficients which define the separating hyperplane. The coefficients are generated, however, in accordance with generalized constraints which are dependent upon the clustering of the input vectors in the dataset. In accordance with a preferred embodiment of the invention, the input vectors are simultaneously mapped to the separating space and to a correction space, depending on the cluster to which the input vector belongs The input vectors of different clusters are mapped to the same separating space but different correction spaces Each correction space defines a correction function for the input vectors in a particular cluster. As the coefficients for the separating hyperplane are generated, they are generated in a manner which optimizes the correction function for each cluster of input vectors In order to optimize the correction functions, the generalized constraints for a cluster of input vectors are defined in a manner which is dependent upon a kernel defined on the correction space to which the input vectors within the cluster are mapped.

By varying the generalized constraints, the learning machine can take advantage of any *a priori* knowledge one may have about the global structure of the data, including the noise characteristics in the input space (as defined by the clusters). The separation is still accomplished in the separation space, but the input vectors can be segregated and mapped to different correction spaces before the optimization problem is solved The generalized constraints can, accordingly, be defined by the structure of the data rather than simply being independent of the data.

These and other advantages of the invention will be apparent to those of ordinary skill in the art by reference to the following detailed description and the accompanying drawings

## BRIEF DESCRIPTION OF DRAWINGS

FIG 1 is an abstract diagram illustrating the principles underlying the disclosed machine learning technique.

FIG. 2 is a flowchart of processing performed in training a learning machine/classifier in accordance with the preferred embodiment

FIG. 3 is a flowchart of processing performed in operating the learning machine/classifier in accordance with the preferred embodiment

## DETAILED DESCRIPTION

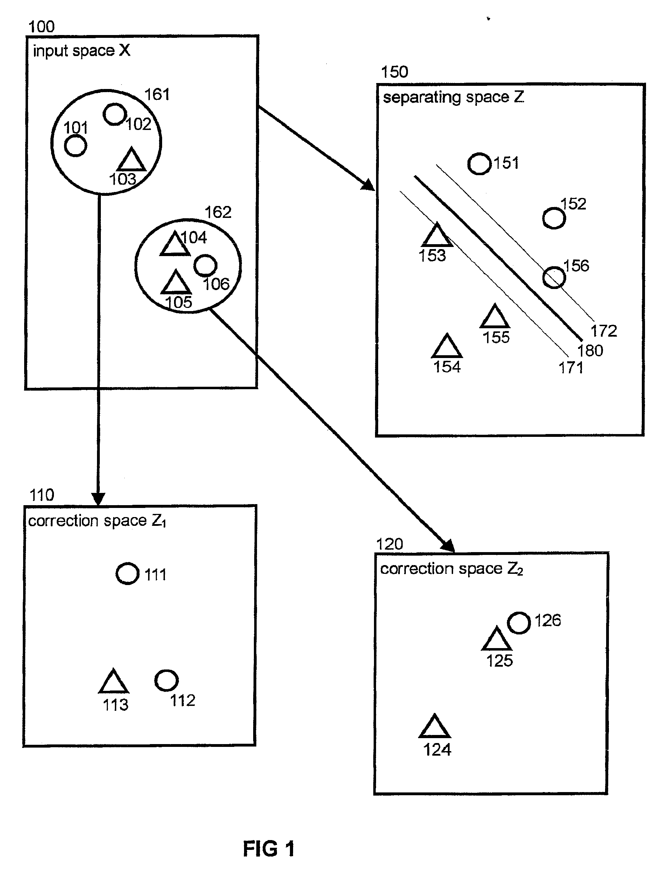

FIG. 1 is an abstract diagram illustrating the principles underlying the disclosed machine learning technique

The training data for the learning machine are represented as input vectors in an input space, e.g., illustratively depicted in FIG. 1 as 101, 102, 106 in the input space 100 Each training input vector 101, 102, 106 is labeled with a classification label, illustratively depicted in FIG 1 as a dot for a first label and as a triangle for a second label The classification label can represent, for example and without limitation, whether the training data corresponding to the input vector is a member or a non-member of a specified class. The goal is to construct a separating function based on the training input vectors 101, 102, 106 which can act as a classifier on the data.

These training input vectors 101, 102, 106, are initially clustered either manually or using any of a number of known automated clustering techniques FIG. 1 depicts two example clusters 161, 162, formed on the training vectors-cluster 161 being formed from input vectors 101, 102, 103, and cluster 162 being formed from input vectors 104, 105, 106 It should be noted that although two clusters are depicted in FIG 1, any number of clusters, including a single cluster on all of the training input vectors, can be formed in accordance with the disclosed technique. In contrast with prior art techniques, each input vector is simultaneously mapped into two spaces a separating space 150 which defines the separating function and into a correction space 110, 120 which defines what the inventors refer to as a correction function. Note that although each of the input vectors 101, 102, ... 106 are mapped into the same separating space 150, each cluster 161, 162 of input vectors can be assigned a different correction function and, accordingly, a different correction space 110, 120. As depicted in FIG. 1, the input vectors in cluster 161 are mapped to correction space 110 while the input vectors in cluster 162 are mapped to correction space 120.

As further explained herein, a separating hyperplane 180 is constructed in the separating space 150 which defines the above-mentioned separating function. The separating hyperplane 180 is constructed in a manner which not only optimizes the margins 171, 172 in the separating space 150, but which also takes into account the correction functions of the corresponding clustered input vectors Accordingly, in contrast with prior art techniques, the separating function can be generated in a manner which takes advantage of any *a priori* knowledge one may have about the global structure of the training data, including the noise characteristics in the input space 100. As further discussed herein, the disclosed technique can be seen as a generalization of the support vector machine framework; accordingly, the inventors refer to the technique as "SVM+".

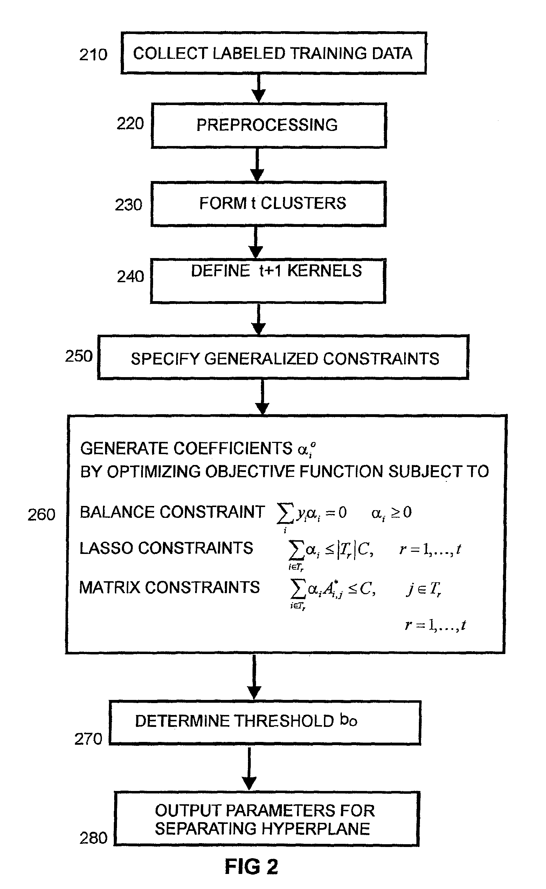

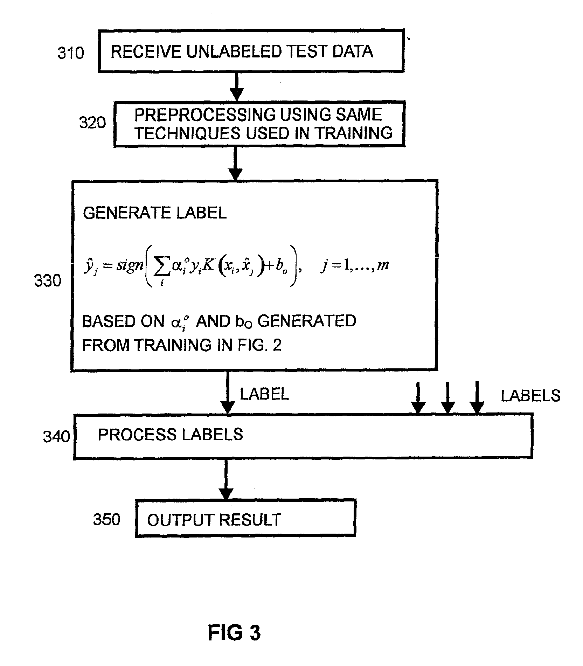

A preferred embodiment is further described with reference to FIG. 2

FIG. 2 is a flowchart of processing performed in training a learning machine/classifier in accordance with the preferred embodiment At step 210, the raw labeled training data $\left\{\left(x_i^0, y_i\right)\right\}_{i=1}^{\ell}$ is eollected. This data may come in any arbitrary format and may come from multiple sources, e.g. known data fusion techniques could be used to integrate information from disparate data sources into a form which could be used as the labeled training data At step 220, general preprocessing can be performed on the raw labeled training data to obtain the input training data $\left\{\left(x_i, y_i\right)\right\}_{i=1}^{\ell}$. The present invention is not limited to any specific preprocessing technique. Examples of conventional techniques of preprocessing include centralization, normalization, scaling, clipping, etc Data with gaps or with different time scales, for example and without limitation, can be readily reconciled using well-known preprocessing techniques As a more sophisticated example, data which is subject to invariances under some form of symmetry transformation can also be transformed by preprocessing into a form that renders the classifier also invariant to the transformations

At step 230, the input training data $\left\{\left(x_i, y_i\right)\right\}_{i=1}^{\ell}$ is clustered to form $t \geq 1$ clusters As mentioned above, the $t$ clusters can be formed manually or using any of a number of known automated clustering techniques The present invention is not limited to any specific clustering technique Any clustering technique, including a hierarchical approach or a partitioning approach such as a k-means or k-medians clustering algorithm, can be readily adapted and utilized Where the input training data is represented in vector form $x_1, \ldots, x_\ell$, these vectors would be the disjoint union of the $t$ clusters of vectors $x_i$. Define the set of the indices of the input training vectors from cluster $r$, $X_r = \{x_{i_1}, \ldots, x_{i_{n_r}}\}$, by $T_r = \{i_1, \ldots, i_{n_r}\}$. It should be noted that although, for purposes of the following discussion, the clusters are assumed to depend on the values of the $x_i$, the clusters could readily be arranged so as to also depend on the values of the $y_i$.

At step 240, kernel functions are defined for the learning machine. As discussed above, the input training vectors $x_i \in X_r$ are simultaneously mapped into a separating space $z_i \in Z$ and a correction space $z_i^r \in Z_r$. Input vectors of different clusters are mapped to the same separating space $Z$ but to different correction spaces $Z_r$. The separating space $Z$ defines the separating function. The correction space $Z_r$ defines a correction function

$$\xi_i = \phi_r(x_i, a), \quad a \in A_r, \quad x_i \in X_r, \quad r = 1, \ldots, t \qquad (2)$$

for each cluster $X_r$ from a set of admissible correcting functions $\phi_r(x_i, a)$, $a \in A_r$, for this cluster. It is assumed that the admissible set of correction functions $\xi = \phi(x, a)$, $a \in A_r$ can be described as linear non-negative functions in $Z_r$ space

$$\xi_i = \phi_r(x_i, a_r) = (w_r, z_i^r) + d_r \geq 0, \qquad r = 1, \ldots, t.$$

Again, as noted above, the correction functions could also depend on the $y_i$ values, although this is not explicitly indicated here. The separating space $Z$ and the correction spaces $Z_r$ are preferably represented as Hilbert spaces. In accordance with Mercer's theorem, there exists in the input vector space a positive definite function, referred to in the art as a kernel function, that defines a corresponding inner product in the separating space $Z$ and the correction spaces $Z_r$. Accordingly, the corresponding inner product for the separating space can be defined by the kernel

$$(z_i, z_j) = K(x_i, x_j)$$

while the corresponding inner product in the correction space for cluster r can be defined by the kernels

$$(z_i^r, z_j^r) = K_r(x_i, x_j) \geq 0, \qquad i, j \in T_r, \qquad r = 1 \ldots t.$$

Note that although prior art techniques use a single kernel, the herein disclosed technique uses up to $(t + 1)$ distinct kernels.
The present invention is not limited to any specific form of kernel function for either the separating space or the correction space(s). The most popular kernels used in machine learning today are the polynomial kernel of degree $d$

$$K(x_i, x_j) = ((x_i, x_j) + c)^d$$

and the exponential kernel

$$K(x_i, x_j) = \exp\left\{ -\left( \frac{\|x_i - x_j\|}{\sigma} \right)^d \right\}, \qquad \sigma > 0, \ 0 \leq d \leq 2.$$

An optimal separating function can then be constructed. The optimal separating hyperplane in the separating space can be found by minimizing the objective function

$$R(w, w_1, \ldots, w_t) = \frac{1}{2}(w, w) + C \sum_{r=1}^{t} \sum_{i \in T_r} ((w_r, z_i^r) + d_r),$$

subject to the constraints

$$y_i[(w, z_i) + b] \geq 1 - ((w_r, z_i^r) + d_r), \qquad i \in T_r, \quad r = 1, \ldots, t,$$

and

$$(w_r, z_i^r) + d_r \geq 0, \qquad i \in T_r, \quad r = 1, \ldots, t.$$

The corresponding Lagrangian is

$$L(w, w_1, \ldots, w_t; \alpha, \mu) = \frac{1}{2}(w, w) + \sum_{r=1}^{t} \sum_{i \in T_r} ((w_r, z_i^r) + d_r)$$

$$- \sum_{i=1}^{\ell} \alpha_i [y_i((w, z_i) + b) - 1 + (w_r, z_i^r) + d_r] - \sum_{i=1}^{\ell} \mu_i ((w_r, z_i^r) + d_r)$$

It can then be shown that the optimal separating hypersurface in $X$ (input) space has the form

$$\sum_{i=1}^{\ell} \alpha_i^o y_i K(x_i, x) + b_o = 0 \qquad\qquad (3)$$

where the coefficients $\alpha_i^o$ maximize the quadratic form

$$W(\alpha) = \sum_{i=1}^{\ell} \alpha_i - \frac{1}{2} \sum_{i,j=1}^{\ell} y_i y_j \alpha_i \alpha_j K(x_i, x_j) \qquad\qquad (4)$$

subject to the constraints

$$\sum_{i=1}^{\ell} y_i \alpha_i = 0 \qquad\qquad (5)$$

and

$$\sum_{i \in T_r} \alpha_i \leq |T_r| C, \qquad r = 1, \ldots, t \qquad\qquad (6)$$

and

$$\sum_{i \in T_r} \alpha_i K_r(x_i, x_j) \leq C \sum_{i \in T_r} K_r(x_i, x_j), \qquad j \in T_r, \quad r = 1, \ldots, t. \qquad (7)$$

where $|T_r|$ is the number of elements in cluster $T_r$ and where $\alpha_i \geq 0$ for $i = 1, \ldots, \ell$. The inventors refer to the constraint in equation (5), which is the same as disclosed in the prior art, as a "balance" constraint. The $t$ constraints in equation (6) will be recognized by those skilled in the art as what is referred to as a "lasso" constraint (see R Tibshirani, "Regression Shrinkage and Selection via the Lasso," J. R Statist Soc (B), 58, 267-288 (1996)).

The constraint in equation (7) can be rewritten in the form

$$\sum_{i \in T_r} \alpha_i A_{i,j}^* \leq C, \qquad j \in T_r, \qquad r = 1, \ldots, t \qquad\qquad (8)$$

where the $0 \leq A_{i,j}^{*} \leq 1$ are elements of a symmetric matrix $A^{*}$ that satisfies the equalities

$$\sum_{i=1}^{\ell} A_{i,j}^{*} = 1, \qquad j = 1, \ldots, \ell.$$

The inventors refer to the constraints defined in equation (8) as the matrix constraints. Note that the above constraint matrix form can be considered as a generalized form of the prior art constraint of $0 \leq \alpha_i \leq C$. When $A_{i,j}^{*} = 1$ if $i = j$ and $A_{i,j}^{*} = 0$ if $i \neq j$, i.e., if the matrix $A^{*}$ is an $\ell \times \ell$ identity matrix, then the above generalized constraint defines the box constraints that are independent of the data, just as in the prior art. In this case, the lasso constraints in equation (6) are automatically satisfied The disclosed technique, however, has the advantage of enabling a broader specification of constraints which can be dependent on the global structure of the data The learning machine, accordingly, can consider the global structure of the training data-which prior art support vector machine techniques ignore

With reference again to FIG. 2, the generalized constraints are specified at step 250. This can be accomplished by defining the constraint matrix $A_{i,j}^{*}$ as described above. Then, at step 260, the coefficients $\{\alpha_i^o\}_{i=1}^{\ell}$ specifying the separating hyperplane are generated by optimizing the objective function in equation (4) under constraints (5), (6), and (8). This has the effect of allowing each cluster $T_r$ to have its own correction function $(w_r, z_i) + d_r$. Finally, at step 270, using the training data $\{(x_i, y_i)\}_{i=1}^{\ell}$ and the multipliers $\{\alpha_i^o\}_{i=1}^{\ell}$, the threshold $b_o$ can be readily determined. The training parameters for the learning machine are $\Omega = \{\alpha_1^o, \ldots, \alpha_\ell^o, b_o\}$. These parameters determine the separating hyperplane in $Z$ (feature) space.

FIG. 3 is a flowchart of processing performed by the learning machine, after the learning machine classifier has been trained The learning machine classifier can be arranged as a single binary classifier or can be arranged as a multiclass classifier using known techniques for reducing a multiclass classification problem to several binary classification problems At step 310, the raw unlabeled data $\{\hat{x}_i^0\}_{i=1}^{m}$ is collected. Again, as discussed above, the raw data may be represented in an arbitrary manner and may in fact be fused from multiple sources At step 320, general preprocessing is performed on the data, as in the training phase, to obtain $\{\hat{x}_i\}_{i=1}^{m}$ At step 330, the coefficients $\{\alpha_i^o\}_{i=1}^{\ell}$ and the threshold $b_o$ generated above are used to define the separating hyperplane In the $Z$ (feature) separating space, the learning machine determines which side of the hyperplane each testing point lies on, by computing

$$\hat{y}_j = \text{sign}\left( \sum_{i=1}^{\ell} \alpha_i^o y_i K(x_i, \hat{x}_j) + b_o \right), \qquad j = 1, \ldots, m.$$

These values are the computed labels for the given data Where the classifier is a binary classifier, the generated label can be simply output or used in the relevant application. Where the classifier is a multiclass classifier, the generated labels from a plurality of binary classifiers are combined at step 340 using known techniques. For example, and without limitation, the multiclass classifier can be comprised of a plurality of binary classifiers, trained as above, where each binary classifier could compare one class to all others or could compare classes pairwise The final result can then be output at step 350

Note that the above training and testing techniques can be readily implemented using hardware, software, or various combinations of hardware and software

The present invention can be readily adapted and utilized in a wide array of applications that includes all problems currently being addressed by the use of support vector machines. This includes, for example and without limitation, general pattern recognition (including image recognition, object detection, and speech and handwriting recognition), regression analysis and predictive modeling (including quality control systems and recommendation systems), data classification (including text and image classification and categorization), bioinformatics (including automated diagnosis systems, biological modeling, and bioimaging classification), data mining (including financial forecasting, database marketing), etc

While exemplary drawings and specific embodiments of the present invention have been described and illustrated, it is to be understood that that the scope of the present invention is not to be limited to the particular embodiments discussed. Thus, the embodiments shall be regarded as illustrative rather than restrictive, and it should be understood that variations may be made in those embodiments by workers skilled in the arts without departing from the scope of the present invention as set forth in the claims that follow and their structural and functional equivalents

**Claims**

1. A method for training a classifier comprising:

   receiving input vectors from a dataset that have been clustered into one or more clusters,
   specifying generalized constraints which are dependent upon the clusters of input vectors in the dataset; and
   optimizing a separating hyperplane in a separating space subject to the generalized constraints, where the input vectors are mapped to the separating space using a kernel function and where the separating hyperplane is determined by a set of coefficients generated in accordance with the generalized constraints

2. The method of claim 1 wherein the generalized constraints are dependent upon a kernel function defined on a correction space into which the input vectors within a cluster are mapped

3. The method of claim 2 wherein the input vectors of different clusters are mapped to the same separating space but to different correction spaces.

4. The method of claim 2 wherein each correction space defines a correction function for each cluster

5. The method of claim 2 wherein the generalized constraints can be represented as

$$\sum_{i \in T_r} \alpha_i K_r(x_i, x_j) \leq C \sum_{i \in T_r} K_r(x_i, x_j), \qquad j \in T_r, \quad r = 1, \ldots, t$$

$$\sum_{i \in T_r} \alpha_i \leq |T_r| C, \qquad r = 1, \ldots, t$$

$$\sum_{i=1}^{\ell} y_i \alpha_i = 0, \qquad \alpha_i \geq 0$$

   where there are $t$ clusters and where $K_r$ is the kernel function defined on the correction space into which the input vectors within the cluster $r$ are mapped, $\alpha_j$ are the coefficients determining the separating hyperplane in the separating space, and $T_r$ defines a set of indices of input vectors within a cluster $r$

6. The method of claim 5 wherein the generalized constraints are alternatively represented as

$$\sum_{i \in T_r} \alpha_i A_{i,j}^* \leq C, \qquad j \in T_r, \qquad r = 1, \ldots, t$$

   where $A_{i,j}^*$ is a symmetric matrix constructed in accordance with claim 5.

7. The method of claim 6 wherein the matrix $A_{i,j}^*$ is an identity matrix and defines box constraints

**8.** The method of claim 6 wherein the matrix $A_{i,j}^{\cdot\cdot}$ does not define box constraints.

**9.** The method of one of claims 1 to 8 wherein preprocessing is applied to the dataset in order to obtain the input vectors.

**10.** The method of one of claims 1 to 9 wherein multiple sets of coefficients are generated so as to form a multiclass classifier.

**11.** A classifier which utilizes coefficients generated in accordance with the method of claims 1-10.

**12.** A computer readable medium comprising computer program instructions which, when executed by a processor, define the steps of

receiving input vectors from a dataset that have been clustered into one or more clusters;
specifying generalized constraints which are dependent upon the clusters of input vectors in the dataset; and
optimizing a separating hyperplane in a separating space subject to the generalized constraints, where the input vectors are mapped to the separating space using a kernel function and where the separating hyperplane is determined by a set of coefficients generated in accordance with the generalized constraints.

**13.** The computer readable medium of claim 12 wherein the generalized constraints are dependent upon a kernel function defined on a correction space into which the input vectors within a cluster are mapped

**14.** The computer readable medium of claim 13 wherein the input vectors of different clusters are mapped to the same separating space but to different correction spaces.

**15.** The computer readable medium of claim 13 wherein each correction space defines a correction function for each cluster

**16.** The computer readable medium of claim 13 wherein the generalized constraints can be represented as

$$\sum_{i \in T_r} \alpha_i K_r(x_i, x_j) \leq C \sum_{i \in T_r} K_r(x_i, x_j), \qquad j \in T_r, \quad r = 1, \ldots, t$$

$$\sum_{i \in T_r} \alpha_i \leq |T_r| C, \qquad r = 1, \ldots, t$$

$$\sum_{i=1}^{\ell} y_i \alpha_i = 0, \qquad \alpha_i \geq 0$$

where there are *t* clusters and where $K_r$ is the kernel function defined on the correction space into which the input vectors within the cluster *r* are mapped, $\alpha_i$ are the coefficients determining the separating hyperplane in the separating space, and $T_r$ defines a set of indices of input vectors within a cluster *r*.

**17.** The computer readable medium of claim 16 wherein the generalized constraints are alternatively represented as

$$\sum_{i \in T_r} \alpha_i A_{i,j}^* \leq C, \qquad j \in T_r, \quad r = 1, \ldots, t$$

where $A_{i,j}^*$ is a symmetric matrix constructed in accordance with claim 16.

**18.** The computer readable medium of claim 17 wherein the matrix $A_{i,j}^{-}$ is an identity matrix and defines box constraints

**19.** The computer readable medium of claim 17 wherein the matrix $A_{i,j}^{*}$ does not define box constraints

**20.** The computer readable medium of claim 12 wherein preprocessing is applied to the dataset in order to obtain the input vectors

**21.** The computer readable medium of claim 12 wherein multiple sets of coefficients are generated so as to form a multiclass classifier.

**22.** An apparatus for training a classifier comprising:

means for receiving input vectors from a dataset that have been clustered into one or more clusters,
means for generating coefficients which determine a separating hyperplane in a separating space, the input vectors being mapped into the separating space, and the coefficients being optimized in accordance with generalized constraints which are dependent upon the clusters of input vectors in the dataset

**FIG 1**

210 | COLLECT LABELED TRAINING DATA

220 | PREPROCESSING

230 | FORM t CLUSTERS

240 | DEFINE t+1 KERNELS

250 | SPECIFY GENERALIZED CONSTRAINTS

260 | GENERATE COEFFICIENTS $\alpha_i^o$
BY OPTIMIZING OBJECTIVE FUNCTION SUBJECT TO

BALANCE CONSTRAINT $\sum_i y_i \alpha_i = 0 \qquad \alpha_i \geq 0$

LASSO CONSTRAINTS $\sum_{i \in T_r} \alpha_i \leq |T_r| C, \qquad r = 1, \ldots, t$

MATRIX CONSTRAINTS $\sum_{i \in T_r} \alpha_i A_{i,j}^* \leq C, \qquad j \in T_r$

$$r = 1, \ldots, t$$

270 | DETERMINE THRESHOLD $b_0$

280 | OUTPUT PARAMETERS FOR SEPARATING HYPERPLANE

**FIG 2**

310 | RECEIVE UNLABELED TEST DATA

320 | PREPROCESSING USING SAME TECHNIQUES USED IN TRAINING

330 | GENERATE LABEL

$$\hat{y}_j = sign\left(\sum_i \alpha_i^o y_i K\left(x_i, \hat{x}_j\right) + b_o\right), \quad j = 1,\dots,m$$

BASED ON $\alpha_i^o$ AND $b_O$ GENERATED FROM TRAINING IN FIG. 2

LABEL                    LABELS

340 | PROCESS LABELS

350 | OUTPUT RESULT

**FIG 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CORINNA CORTES ; VLADIMIR N VAPNIK.** Support Vector Networks. *Machine Learning,* September 1995, vol. 20, 273-97

- **R TIBSHIRANI.** Regression Shrinkage and Selection via the Lasso. *J. R Statist Soc (B,* 1996, vol. 58, 267-288